# EUROPÄISCHE PATENTSCHRIFT

(11) **EP 2 227 345 B1**
(45) Veröffentlichungstag und Bekanntmachung des Hinweises auf die Patenterteilung: **31.08.2011**
(21) Anmeldenummer: 08870352.5
(22) Anmeldetag: 11.11.2008
(51) Int. Cl.: B23D 51/10, B23D 49/16

(54) **HANDHUBSÄGEMASCHINE**
HANDHELD JIGSAW
MACHINE À SCIER PORTATIVE À MOUVEMENT ALTERNATIF

(30) Priorität: 10.01.2008 DE 102008003739
(43) Veröffentlichungstag der Anmeldung: 15.09.2010
(73) Patentinhaber: Robert Bosch GmbH, 70442 Stuttgart (DE)
(72) Erfinder: RAKACZKI, Janos, H-3521 Miskolc (HU)
(86) Internationale Anmeldenummer: PCT/EP2008/065304
(87) Internationale Veröffentlichungsnummer: WO 2009/086971

(56) Entgegenhaltungen:
- DE-A1- 10 106 051
- JP-A- 8 155 902
- US-A- 5 103 565

## Beschreibung

### Stand der Technik

Es sind Handhubsägemaschinen mit rohrartiger bzw. zylindrischer Hubstange und im Inneren der Hubstange angeordneter Sägeblattspanneinrichtung bekannt. Diese Handhubsägemaschinen sind zwar kompakt, aber schwer und teuer, weil radiale Öffnungen in der Hubstange für die aufwändigen Betätigungselemente der Sägeblattspanneinrichtung vorgesehen sind. Weiter sind auch Handhubsägemaschinen mit flacher Hubstange und großvolumigem Spannfutter bekannt, die kostengünstiger aber verhältnismäßig schwer sind, wobei die Hubstange mit dem großen Spannfutter zu lang und daher ungeeignet ist für eine kompakte, kleine und leichte Hubsäge. Außerdem hat das große Spannfutter zur Folge, dass es mit dem Schaft des Sägeblatts stets einen großen Überstand über das untere Hubstangenlager hat, so dass am über das untere Hubstangenlager überstehenden Bereich der Hubstange ein hohes Biegemoment angreift, so dass das Sägeblatt sich durch die Bedienkräfte beim Sägen leicht aus der vorgesehenen Bahn bringen läßt, was zu schiefen Sägeschnitten führen kann.

Aus der US 5103 565 A ist eine Handhubsägemaschine mit einer Hubstange und einer an deren unterem Ende befestigten Sägeblattspanneinrichtung zum lösbaren Halten eines Sägeblatts bekannt, wobei die Hubstange als Rohr ausgestaltet ist, das am freien Ende innen die Spanneinrichtung aufnimmt, die aus einem in der Hubstange längsverschieblichen Keil besteht, der als Spannbacke dient und sich seitlich an einer ebenfalls längs in der Hubstange fixierbar angeordneten schrägen Gegenfläche verschieblich abstützt, wobei eine achsparallele Spannfläche des Keils zum flächigen Abstützen an einer Flachseite des Sägeblatts, insbesondere an dessen Schaft, dient und wobei der Keil von oben mit elastischen Mitteln, Insbesondere einer vorgespannten Spannfeder, axial nach unten beaufschlagbar ist.

Aus der JP 08 155902 A ist eine Handhubsägemaschine mit einer Hubstange und einer an deren unterem Ende befestigten Sägeblattspanneinrichtung zum lösbaren Halten eines Sägeblatts bekannt Die Hubstange ist als Rohr ausgestaltet, wobei die Spanneinrichtung am freien Ende des Rohres axial außen aufgenommen ist. Die Spanneinrichtung besteht aus zwei, eine Schrägfläche tragenden Keile.

Aus der DE 10106 051 A1 ist eine Handhubsägemaschine mit einer Hubstange und einer an deren unterem Ende befestigten Sägeblattspanneinrichtung zum lösbaren Halten eines Sägeblatts bekannt, wobei die Hubstange als Rohr ausgestaltet ist, das am freien Ende innen die Spanneinrichtung aufnimmt, die aus zwei, eine Schrägfläche tragenden, in der Hubstange querverschieblichen Keilen besteht, die als Spannbacken dienen und die sich seitlich an einer ebenfalls längs in der Hubstange fixierbar angeordneten schrägen Gegenfläche verschieblich abstützen, wobei eine achsparallele Spannfläche der Keile zum flächigen Abstützen an einer Flachseite des Sägeblatts, insbesondere an dessen Schaft, dient und wobei die Keile von oben mit elastischen Mitteln, insbesondere einer vorgespannten Spannfeder, axial nach unten beaufschlagbar sind.

### Offenbarung der Erfindung

Durch die Verwendung der Merkmale gemäß Anspruch 1 wird eine Handhubsägemaschine geschaffen, die aufgrund der einfachen Sägeblattspanneinrichtung leicht und preisgünstig herstellbar ist und die überdies mit gleicher Präzision arbeitet wie wesentlich aufwändiger hergestellte

Handhubsägemaschinen.

Dadurch, dass die mindestens eine Gegenfläche der Schrägfläche zu einem Gegenkeil gehört, der in der Hubstange fixierbar ist, ist eine einfache und wirkungsvolle Spannbacken-Mechanik geschaffen.

Dadurch, dass der Gegenkeil ein gesinterter Formköper ist, ist er maßgenau und verschleißfest.

Dadurch, dass der Gegenkeil Vertiefungen und/oder Vorsprünge hat, die in Vertiefungen und/oder Vorsprünge der Hubstange, insbesondere durch Prägen, befestigt sind, ist er besonders robust gehaltert und sichert zuverlässiges Arbeiten der Sägeblattspanneinrichtung.

Dadurch, dass die mindestens eine Gegenfläche ein integrierter Teil der Hubstange ist, ist die Spanneinrichtung kostengünstig herstellbar.

Dadurch, dass die mindestens eine Gegenfläche als ein verformter Teil der Hubstange augestaltet ist, kann auf einen gesonderten Gegenkeil verzichtet werden, weil dieser damit ohne Festigkeitseinbuße in die Hubstange integriert ist.

Dadurch, dass die mindestens eine schief ebene Gegenfläche Teil eines Winkelblechs oder eines Blechformkörpers ist, ist eine kostengünstige Variante des Gegenkeils geschaffen.

Dadurch, dass eine axial unten aus der Hubstange austretende, axial verschiebliche Drucktaste zum Spannen und Lösen der Spanneinrichtung dient, ist die Hubstange durch Verzicht auf radiale Öffnungen für den Eingriff von Bedienelementen einfach und konstengünstig gestaltbar.

Dadurch, dass sich die Drucktaste über elastische Elemente an den verschieblichen Spannkeilen abstützt, sind diese sicher über einen Druckpunkt in ihre Löseposition führbar.

Dadurch, dass die Drucktaste in einer Schiebeführung im Inneren der Hubstange am Hubstangenende gelagert ist, ist sie gegen Verdrehen gesichert angeordnet.

Dadurch, dass das zu spannende Sägeblatt axial, insbesondere mittig, durch eine Öffnung der Drucktaste hindurch führbar ist, dient die Drucktaste als Zentriermittel beim Neubestücken der Säge mit einem Sägeblatt.

### Zeichnung

Nachstehend ist die Erfindung anhand eines Ausführungsbeispiels mit zugehöriger Zeichnung näher erläutert.

### Es zeigen

Figur 1 einen Teillängsschnitt einer Stichsäge mit der neuen Spanneinrichtung,
Figur 2 die Seitenansicht der Hubstange mit Sägeblatt und Spanneinrichtung als Einzelheit,
Figur 3 einen vergrößerten Längsschnitt der Hubstange nach Figur 2,
Figur 4 den Längsschnitt der Hubstange nach Figur 3 um 90° gedreht,
Figur 5 ein Querschnitt der Hubstange nach Figur 4 von oben gesehen und
Figur 6 einen weiter vergrößerten Längschnitt nach Figur 3.

### Beschreibung des Ausführungsbeispiels

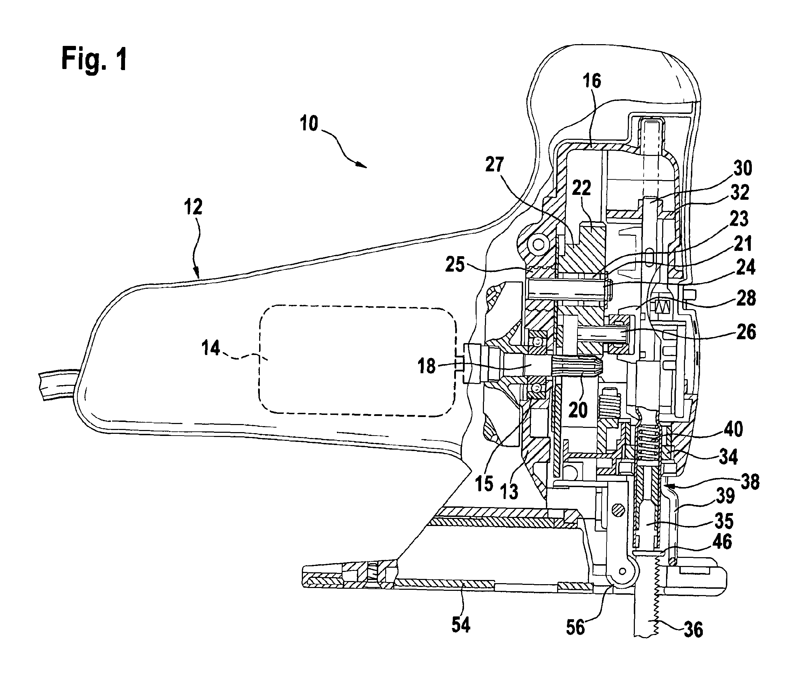

Die in Figur 1 dargestellte Stichsäge 10 besteht aus einem Gehäuse 12, in dem ein symbolisch dargestellter Motor 14 angeordnet ist. Der Motor 14 dient zum Antrieb einer Hubstange 30 und erteilt dieser über ein Getriebe 20, 22, 26, 28 eine hin- und hergehende Bewegung, die auf ein Sägeblatt 36 übertragen wird. Das Sägeblatt 36 ist in einer Sägeblattspanneinrichtung 38 am Ende der Hubstange 30 lösbar zu spannen.

Das Gehäuse 12 ist an seiner Unterseite mit einer Fußplatte 54 schwenkbar verbunden, durch die hindurch das Sägeblatt 36 nach unten hindurchtritt, um unterhalb der Fußplatte 54 sägen zu können.

Die als durchgehend glattes, rundes Rohr ausgestaltete Hubstange 30 ist im Gehäuse 12 mittels eines oberen und eines unteren Hubstangenlagers 32, 34 geradverschiebbar gelagert und ist an ihrem unteren Ende mit einer im Inneren des Rohres integrierten Sägeblattspanneinrichtung 38 zur Aufnahme des Sägeblatts 20 versehen. Das Rohr ist zwischen seinen äußersten Enden in den maximal weit voneinander beabstandeten Hubstangenlagern 32, 34 gelagert. Dabei bildet der große Abstand zwischen oberem und unterem Hubstangenlager 32, 34 eine äußerst stabile Geradführung der Hubstange 30. Da die Sägeblattspanneinrichtung 38 am unteren freien Ende nur im Inneren der Rohres angeordnet ist, ohne über diese radial hinauszugehen, kann der entsprechende Bereich des Rohres bis zum äußersten Ende vom unteren Hubstangenlager 34 umgriffen sein und sich ungehindert hin- und hergehend bewegen. Dadurch durchfährt zum Ende des Aufwärtshubs bzw. zu Beginn des Abwärtshubs der Hubstange 30 das in der Sägeblattspanneinrichtung 38 gespannte Sägeblatt 36 mit seinem Schaft 35 den Bereich des unteren Hubstangenlagers 34. Dadurch, dass das längliche Sägeblatt 36 verhältnismäßig nah am unteren Hubstangenlager 34 gespannt sitzt, sind die Hebelverhältnisse zur Aufnahme der auf Sägeblatt 36 und Hubstange 30 wirkenden Kräfte beim Sägen günstiger als bei Hubsägen mit über das untere Hubstangenlager 34 hinausragendem Spannfutter. Somit ist das Sägeblatt 36 bzw. auch die Hubstange 30 mit hoher Steifigkeit gegen Reaktionskräfte beim Sägen geführt.

Der Motor 14 hat eine in einem Motorlager 15 in einer hinteren Gehäusewand 13 eines Innengehäuses 16 drehende Motorwelle 18, die bis nahe zur Hubstange 30 ragt. Auf dem Ende der Motorwelle 18 sitzt ein Motorritzel 20, das mit einem Exzenterzahnrad 22 kämmt. Dieses ist drehbar auf seiner Zahnradachse 24 gelagert, die in einer Lagerbuchse 25 der hinteren Gehäusewand 13 sitzt. Zwischen Exzenterzahnrad 22 und Zahnradachse 24 ist ein Wälzlager 23 und am Ende der Zahnradachse 24 eine Axialsicherung 21 für das Exzenterzahnrad 22 angeordnet.

Das Exzenterzahnrad 22 trägt einen axial zur Hubstange 30 hin ragenden Exzenterzapfen 26, der in eine mit der Hubstange 30 fest verbundene Kulisse 28 greift und die Drehbewegung des Exzenterzahnrads 22 in eine hin- und hergehende Bewegung der Hubstange 30 bzw. des Sägeblatts 36 umsetzt.

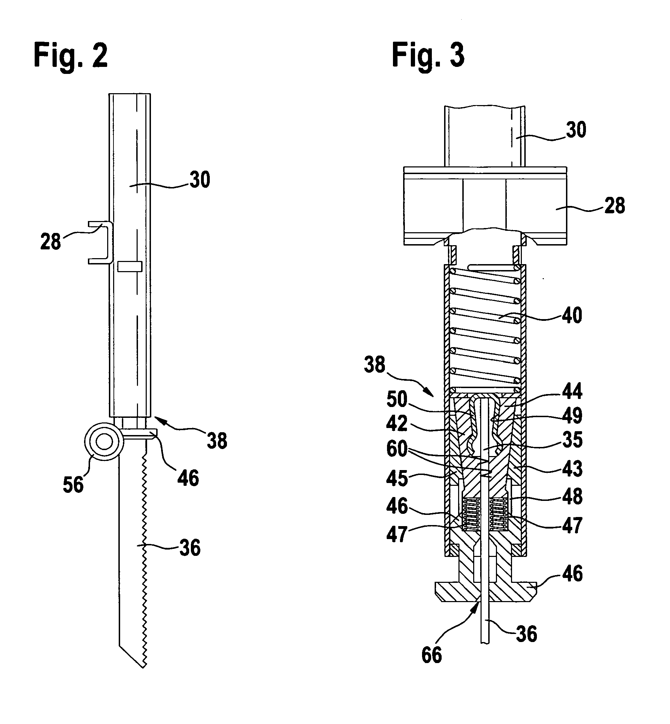

Auf der dem Exzenterzapfen 26 entgegengesetzten Seite trägt das Exzenterzahnrad 22 einen weiteren Exzenter in Gestalt einer Exzenterscheibe 27. Diese ist mit ihrer Exzentrizität entgegengesetzt bzw. 180° versetzt zum Exzenterzapfen 26 angeordnet und treibt eine nichtdargestellte Gegenmasse entgegengesetzt zur Hubstange 30 an. Diese gleicht die Hubstangen-Massenkräfte bei deren Hin- und Herbewegung aus. Die Einzelheiten der Sägeblattspanneinrichtung 38 werden im folgenden zu den Figuren 2 bis 5 erläutert.

Figur 2 zeigt die Hubstange 30 als Einzelheit als Seitenansicht, wobei die Kulisse 28, das Sägeblatt 36, sowie eine Drucktaste 46 der Sägeblattspanneinrichtung 38 und eine gehäuseseitige Führungsrolle 56 zum Abstützen des Rückens des Sägeblatts 36 erkennbar sind.

Der gemäß Figur 2 in Figur 3 vergrößerte, um 90° gedrehte Längsschnitt der Hubstange 30 zeigt deutlich die Einzelheiten der Sägeblattspanneinrichtung 38. Diese besteht aus zwei gleichen, als Befestigungselement dienenden Keilen 42, 44. Die Keile 42, 44 sind bezüglich der Hubstangenachse symmetrisch einander gegenüber angeordnete Sinterteile, die sich mit ebenen Spannflächen 60 seitlich, mittig in der Hubstange 30 aneinander abstützen, wenn die Sägeblattspanneinrichtung 38 frei von einem Sägeblatt 35 ist. Ist jedoch ein Sägeblatt 36 zwischen die Keile 42, 44 eingesetzt, stützen sich diese jeweils außen an den Sägeblattflachseiten des Schafts 35 ab und spannen damit das Sägeblatt 36 zangenartig zwischeneinander fest. Die Keile 42, 44 haben radial außen auf der dem Sägeblatt 36 abgewandten Seite je eine Schrägfläche 62 mit ca. 6,5° Neigung, mit der sie sich an Gegenflächen 64 mit gleicher aber gegensinniger Neigung eines Gegenkeils 45 verschiebbar abstützen. Der 6,5° Winkel der Schräg- und Gegenflächen 62, 64 bewirkt Selbsthemmung zwischen die Keilen 42, 44 und den Gegenflächen 62, 64, so dass sich die Keile 42, 44 nicht ohne weiteres axial bzw. relativ zueinander verschieben und damit das Sägeblatt 36 nicht ungewollt aus der Spannposition loslassen können. Die Keile 42, 44 haben oben, in Verlängerung der Spannflächen 60 je eine Aussparung 49 zum Eingriff einer u-förmigen Blatt-Feder 50, die die Keile 42, 44 voneinander weg zudrücken sucht, damit sich zwischen den Spannflächen 60 der Keile 42, 44 ein Zwischenraum zum Einsetzen eines Sägeblatts 36 öffnet, sobald die Keile 42, 44 axial nach oben verschoben werden.

Zum Verschieben der Keile 42, 44 nach oben gegen eine Spiralfeder 40 dient eine stempelartige Drucktaste 46. Diese ist in einer Schiebeführung 48 der Hubstange 30 gerade verschiebbar, verdrehsicher und unverlierbar gelagert. Sie kann gemeinsam mit den Keilen 42, 44 axial aus Ihrer Null-Lage verschoben werden, ohne herauszufallen. Die Null-Lage der Drucktaste 64 gegenüber den Keilen 42, 44 wird durch zwei Spiralfedern 47 gesichert, die sich zwischen die Unterseiten der Keile 42, 44 und der Drucktaste 64 spannen und bei Betätigung der Drucktaste 46 einen Druckpunkt bilden, bei dem die Keile 442, 44 dann tatsächlich der Drucktaste 46 folgen müssen. Die Drucktaste 46 hat unten eine zentrale Durchtrittsöffnung 66 (Fig. 3) für das Sägeblatt 36, die das korrekte, zentrierende Einführen des Sägeblatts 36 in die Sägeblattspanneinrichtung 38 erleichtert.

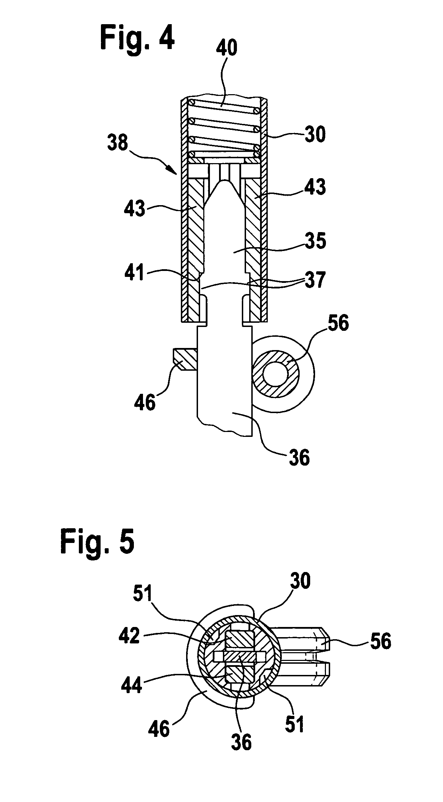

Der Gegenkeil 45 hat radial außen zwei Löcher 51 (Fig. 5) in die das Material des Rohres radial nach innen eingeprägt ist. Diese Einprägung hält die Gegenkeile 45 verliersicher in der Hubstange 30 fest und sichert die präzise Funktion der Sägeblattspanneinrichtung 38. Die Gegenkeile 45 können beispielsweise als Sintermetall- Körper aber auch als Blechprägeteil ausgestaltet sein.

Anstelle der gesonderten Gegenkeile 45 kann das Material des Rohres so verformt sein, dass damit die schiefebenen Gegenflächen 64 zum Abstützen der Schrägflächen 62 der Keile 42, 44 als integriertes Teil der Hubstange 30 gebildet werden.

In der Null-Lage stehen die Keile 42, 44 in ihrer axial unteren Position, die durch die Spannfeder 40 gesichert wird. In dieser Position besteht nur eine minimaler Abstand bzw. Spalt zwischen den zwei Keilen 42, 44. Der Spalt ist kleiner als die Schmalseite des Sägeblatts 36. Zum Einsetzen des Sägeblatts 36 kann die Drucktaste 46 nach oben geschoben werden, wobei mit entsprechendem Kraftaufwand allein durch axiales Einschieben des Sägeblatts 36 die Keile 42, 44 axial nach oben ausweichen, den Spalt zwischeneinander. Sobald der Spalt genügend breit ist, kann das Sägeblatt 36 bis auf Anschlag seiner Nasen 37 (Figur 4) an einer Stufe 41 des Gegenkeils 43 eingeschoben werden. Sobald sich dabei die Spannflächen 60 der Keile 42, 44 am Schaft 35 des Sägeblatts 36 abstützen, kann das Sägeblatt 36 bzw. die Drucktaste 46 losgelassen werden. Die Keile 42, 44 sichern dann mit ihren Spannflächen 60 das Sägeblatt 36 zangenartig von beiden Seiten durch die Kraft der Spiralfeder 40. Die Spiralfeder 40 drückt die Keile 42, 44 schlitzverengend axial nach unten und dabei radial auf einander zu. Damit ist das Sägeblatt 36 sicher eingespannt und arbeitsbereit aufgenommen.

Zum Lösen des Sägeblatts 36 muss die Drucktaste 46 axial nach oben gedrückt betätigt werden. Zunächst drückt sie die Druckfedern 47 zusammen und nimmt bei Erreichen des Druckpunkts die Keile 42, 44 nach oben mit gegen die Spannfeder 40 und drückt diese zusammen. Während die Keile 42, 44 sich nach oben bewegen, öffnet sich der Spalt zwischen ihnen, wobei die Blattfeder 50 dessen Parallelität sichert, indem sie die Keile 42, 44 radial nach außen zu den Gegenflächen 64 des Gegenkeils 45 schiebt. Sobald der Spalt sich öffnet, kann das Sägeblatt 36 ohne Weiteres leicht von Hand axial nach unten entnommen werden.

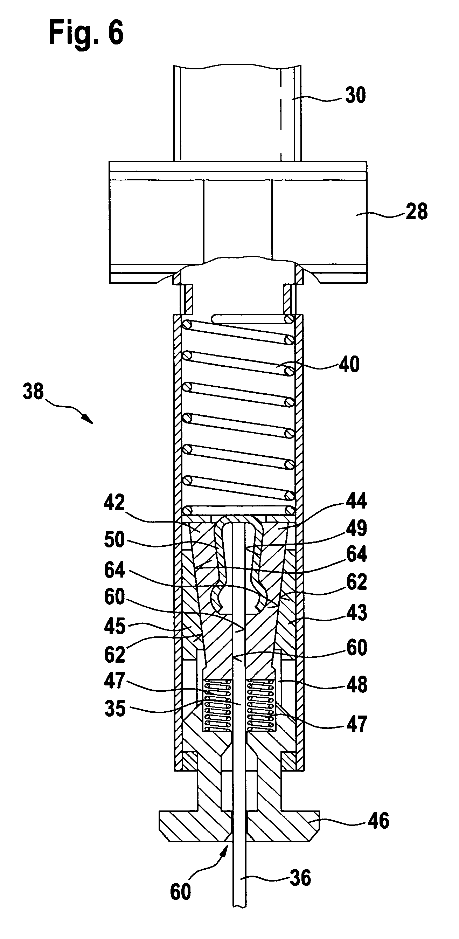

Figur 6 zeigt in einem nochmals vergrößerten Längschnitt nach Figur 3 die Spannflächen 60 der Keile 42, 44 und die Schrägflächen 62 der Gegenkeile 45 besonders deutlich sowie die schon zu Figur 3 erläuterten Einzelheiten.

Der Berührungsschutz 39 verhindert beim Betätigen der Drucktaste 46 insbesondere zum Lösen des Sägeblatts 36, dass die Bedienhand durch das Sägeblatt 36 verletzt wird.

Bei einem nicht dargestellten Ausführungsbeispiel ist eine sich am Schaft 35 axial abstützende, vorgespannte Feder vorgesehen, die das Sägeblatt 36 beim Öffnen der Sägeblattspanneinrichtung 38 axial nach unten auswirft.

## Patentansprüche

1. Handhubsägemaschine mit einer Hubstange (30) und einer an deren unterem Ende befestigten Sägeblattspanneinrichtung (38) zum lösbaren Halten eines Sägeblatts (36), insbesondere mit einem Berührungsschutz (39), wobei die Hubstange (30) als Rohr, insbesondere durchgehend glattes Rundrohr, ausgestaltet ist, das am freien Ende innen die Spanneinrichtung (38) aufnimmt, die aus zwei, eine Schrägfläche (62) tragenden, in der Hubstange (30) längsverschieblichen Keilen (42, 44) besteht, die als Spannbacken dienen und die sich seitlich an einer ebenfalls längs in der Hubstange (30) fixierbar angeordneten schrägen Gegenfläche (64) verschieblich abstützen, wobei eine achsparallele Spannfläche (60) der Keile (42, 44) zum flächigen Abstützen an einer Flachseite des Sägeblatts (36), insbesondere an dessen Schaft (35), dient, wobei die Keile (42, 44) von oben mit elastischen Mitteln, insbesondere einer vorgespannten Spannfeder (40), axial nach unten beaufschlagbar sind, und wobei eine axial unten aus der Hubstange (30) ragende, zur Hubstange hin verschiebliche Drucktaste (46) zum Spannen-/Lösen der Sägeblattspanneinrichtung (38) dient.

2. Handhubsägemaschine nach Anspruch 1, **dadurch gekennzeichnet, dass** die mindestens eine Gegenfläche (64) zu einem Gegenkeil (43) gehört, der in der Hubstange (30) fixierbar ist.

3. Handhubsägemaschine nach Anspruch 2, **dadurch gekennzeichnet, dass** der Gegenkeil (43) ein gesinterter Formköper ist.

4. Handhubsägemaschine nach Anspruch 2 oder 3, **dadurch gekennzeichnet, dass** der Gegenkeil (43) Vertiefungen, insbesondere Löcher (51) und/oder Vorsprünge hat, die in Vertiefungen und/oder Vorsprünge der Hubstange (30), insbesondere durch Prägen, eintreten und somit einander formschlüssig festhalten.

5. Handhubsägemaschine nach Anspruch 1, **dadurch gekennzeichnet, dass** die mindestens eine Gegenfläche (64) ein integrierter Teil der Hubstange (30) ist und damit auf einen gesonderten Gegenkeil (43) verzichtet wird.

6. Handhubsägemaschine nach Anspruch 1 oder 5, **dadurch gekennzeichnet, dass** die mindestens eine Gegenfläche (64) ein verformter Teil der Hubstange (30) ist.

7. Handhubsägemaschine nach Anspruch 1 oder 5, **dadurch gekennzeichnet, dass** die mindestens eine Gegenfläche (64) Teil eines Blechformkörpers ist.

8. Handhubsägemaschine nach einem der vorhergehenden Ansprüche, **dadurch gekennzeichnet, dass** sich die Drucktaste (46) über elastische Elemente, insbesondere Druckfedern (47) axial an den Spannkeilen (42, 44) abstützt.

9. Handhubsägemaschine nach einem der vorhergehenden Ansprüche, **dadurch gekennzeichnet, dass** die Drucktaste (46) in einer Schiebeführung im Inneren der Hubstange (30) am Hubstangenende gelagert sind.

10. Handhubsägemaschine nach einem der vorhergehenden Ansprüche, **dadurch gekennzeichnet, dass** das zu spannende Sägeblatt (36) axial, insbesondere mittig, durch eine Öffnung der Drucktaste (46) hindurchtritt

## Claims

1. Handheld jigsaw comprising a stroke rod (30) and a saw blade clamping device (38) fastened to the bottom end thereof for detachably holding a saw blade (36), in particular comprising a touch guard (39), wherein the stroke rod (30) is configured as a tube, in particular a continuously smooth round tube, which accommodates the clamping device (38) on the inside at the free end, said clamping device (38) consisting of two wedges (42, 44) which have a sloping surface (62), are longitudinally displaceable in the stroke rod (30), serve as clamping jaws and are displaceably supported laterally on a sloping mating surface (64) fixably arranged, likewise longitudinally, in the stroke rod (30), wherein an axially parallel clamping surface (60) of the wedges (42, 44) serves for planar support on a flat side of the saw blade (36), in particular on the shank (35) thereof, wherein the wedges (42, 44) can be acted upon axially downwards from above by elastic means, in particular a preloaded clamping spring (40), and wherein a pushbutton (46) projecting axially downwards from the stroke rod (30) and displaceable towards the stroke rod serves for clamping/releasing the saw blade clamping device (38).

2. Handheld jigsaw according to Claim 1, **characterized in that** the at least one mating surface (64) belongs to a mating wedge (43) which can be fixed in the stroke rod (30) .

3. Handheld jigsaw according to Claim 2, **characterized in that** the mating wedge (43) is a sintered moulded body.

4. Handheld jigsaw according to Claim 2 or 3, **characterized in that** the mating wedge (43) has recesses, in particular holes (51), and/or projections which enter recesses and/or projections of the stroke rod (30), in particular by embossing, and are thus held in place on one another in a positive-locking manner.

5. Handheld jigsaw according to Claim 1, **characterized in that** the at least one mating surface (64) is an integrated part of the stroke rod (30) and thus a separate mating wedge (43) is dispensed with.

6. Handheld jigsaw according to Claim 1 or 5, **characterized in that** the at least one mating surface (64) is a shaped part of the stroke rod (30).

7. Handheld jigsaw according to Claim 1 or 5, **characterized in that** the at least one mating surface (64) is part of a shaped sheet-metal body.

8. Handheld jigsaw according to one of the preceding claims, **characterized in that** the pushbutton (46) is supported axially on the clamping wedges (42, 44) via elastic elements, in particular compression springs (47).

9. Handheld jigsaw according to one of the preceding claims, **characterized in that** the pushbutton (46) is mounted in a sliding guide in the interior of the stroke rod (30) at the stroke rod end.

10. Handheld jigsaw according to one of the preceding claims, **characterized in that** the saw blade (36) to be clamped passes axially, in particular centrally, through an opening in the pushbutton (46).

## Revendications

1. Scie à mouvement alternatif manuelle comprenant une barre de levage (30) et un dispositif de serrage de lame de scie (38) fixé à son extrémité inférieure pour retenir de manière amovible une lame de scie (36), en particulier avec une protection contre le contact (39), la barre de levage (30) étant configurée sous forme de tube, notamment de tube rond entièrement lisse, qui reçoit à son extrémité libre à l'intérieur le dispositif de serrage (38), qui se compose de deux cales (42, 44) déplaçables longitudinalement dans la barre de levage (30) et portant une surface oblique (62), qui servent de mâchoires de serrage et qui s'appuient latéralement de manière déplaçable sur une surface conjuguée (64) oblique disposée de manière à pouvoir également être fixée longitudinalement dans la barre de levage (30), une surface de serrage (60) à axe parallèle des cales (42, 44) servant au support à plat contre un côté plat de la lame de scie (36), notamment contre sa tige (35), les cales (42, 44) pouvant être sollicitées depuis le haut par des moyens élastiques, notamment par un ressort de serrage précontraint (40), axialement vers le bas, et un bouton poussoir (46) déplaçable vers la barre de levage, saillant axialement vers le bas hors de la barre de levage (30), servant au serrage/desserrage du dispositif de serrage de la lame de scie (38).

2. Scie à mouvement alternatif manuelle selon la revendication 1, **caractérisée en ce que** l'au moins une surface conjuguée (64) appartient à une cale conjuguée (43), qui peut être fixée dans la barre de levage (30).

3. Scie à mouvement alternatif manuelle selon la revendication 2, **caractérisée en ce que** la cale conjuguée (43) est un corps moulé fritté.

4. Scie à mouvement alternatif manuelle selon la revendication 2 ou 3, **caractérisée en ce que** la cale conjuguée (43) présente des renfoncements, notamment des trous (51) et/ou des saillies, qui pénètrent dans les renfoncements et/ou les saillies de la barre de levage (30), en particulier par gaufrage, et sont ainsi fixés les uns dans les autres par engagement positif.

5. Scie à mouvement alternatif manuelle selon la revendication 1, **caractérisée en ce que** l'au moins une surface conjuguée (64) fait partie intégrante de la barre de levage (30) et l'on se passe ainsi d'une cale conjuguée séparée (43).

6. Scie à mouvement alternatif manuelle selon la revendication 1 ou 5, **caractérisée en ce que** l'au moins une surface conjuguée (64) est une pièce façonnée de la barre de levage (30).

7. Scie à mouvement alternatif manuelle selon la revendication 1 ou 5, **caractérisée en ce que** l'au moins une surface conjuguée (64) fait partie d'un corps moulé en tôle.

8. Scie à mouvement alternatif manuelle selon l'une quelconque des revendications précédentes, **caractérisée en ce que** le bouton poussoir (46) s'appuie axialement sur des éléments élastiques, notamment des ressorts de pression (47) sur les cales de serrage (42, 44).

9. Scie à mouvement alternatif manuelle selon l'une quelconque des revendications précédentes, **caractérisée en ce que** le bouton poussoir (46) est monté dans un guide coulissant à l'intérieur de la barre de levage (30) à l'extrémité de la barre de levage.

10. Scie à mouvement alternatif manuelle selon l'une quelconque des revendications précédentes, **caractérisée en ce que** la lame de scie (36) à serrer passe axialement, notamment centralement, à travers une ouverture du bouton poussoir (46).
